# EUROPEAN PATENT SPECIFICATION

(11) **EP 3 781 423 B1**
(45) Date of publication and mention of the grant of the patent: **06.03.2024**
(21) Application number: 19893941.5
(22) Date of filing: 20.03.2019
(51) Int. Cl.: B60J 5/06, E05D 15/00, E05D 15/06

(54) **A GUIDE COVER OPENING-CLOSING MECHANISM**
ÖFFNUNGS-/SCHLIESSMECHANISMUS FÜR FÜHRUNGSABDECKUNG
MÉCANISME D'OUVERTURE/FERMETURE DE CACHE-GLISSIÈRE

(30) Priority: 18.04.2018 TR 201805505
(43) Date of publication of application: 24.02.2021
(73) Proprietor: Rollmech Automotive Sanayi Ve Ticaret Anonim Sirketi, Bursa (TR)
(72) Inventor: BAYRAM, Ali Nazmi, Bursa (TR); DEMIRAYAK, Ilker, Bursa (TR); AYDIN, Ismet, Nilufer/Bursa (TR); BILGIN, Ufuk, 16159 Nilufer/Bursa (TR); AKARCAY, Erhan, Nilufer/Bursa (TR)
(74) Representative: Kaya, Erdem
(86) International application number: PCT/TR2019/050180
(87) International publication number: WO 2020/117147

(56) References cited:
- CN-A- 107 415 656
- CN-U- 204 263 899
- CN-U- 204 263 899
- DE-A1- 19 921 877
- JP-A- H08 244 462
- KR-A- 20080 055 449
- US-A- 5 676 417

## Description

### TECHNICAL FIELD

The present invention relates to a guide cover opening-closing mechanism particularly provided at the body part of the sliding door vehicles and which provides opening and closing of the sliding door and which provides opening of the guides, which carry the door, in a manner preventing viewing from outside in case the vehicle door is closed and in a manner permitting movement of the roller mechanisms, which provides movement of the guides thereon, on the guide.

### KNOWN STATE OF THE ART

In the known state of the art, generally fixed covers are used for hiding the center guides. These fixed covers partially cover the guide and have an opening through which the roller mechanisms, which carry the sliding door and which move the sliding door along the guide, can pass. This opening leads to image deterioration when the outer body of the vehicle is viewed and leads to an undesired condition at the final user side.

In the patent document with no US5676417, a finger-shaped protrusion, fixed to the vehicle body by means of hinge and provided on the roller mechanism which carries the sliding door when the sliding door is opened, pushes the cover upwardly which is fixed to the body by means of a hinge and provides lifting of the cover. In the closing position of the sliding door, the contact of the protrusion, which is in finger shape, to the cover is interrupted and the protrusion can return to its prior position thanks to the torsion springs provided on the hinges providing holding of the cover to the body. However, this system has various disadvantages. The first one of these disadvantages is that the springs, which keep the cover which hides the guide while the vehicle is driven on the road in closed position, are loosened and said springs continously contact the body and lead to noise which disturbs users. Another problem is that the guide cover can be easily opened by means of any external effect even if the door is closed, and thus, it is observed that this structure, which is aimed to hide and protect, cannot fulfill its function firmly.

### TECHNICAL PROBLEMS AIMED TO BE SOLVED BY THE INVENTION

The main object of the present invention relates to a guide cover opening-closing mechanism which provides closing of the cover, which hides the guide when the sliding door is closed, such that said the guide cannot be seen from outside and which provides automatic opening of the guide cover while the sliding door begins opening.

Another object of the present invention relates to a guide cover mechanism which prevents opening of the cover, which provides hiding of the guide when the sliding door is closed, due to any external reason and which prevents formation of noises and vibrations which occur on the cover while the vehicle is driven on a rough road.

In a possible embodiment of the present invention, the outer chamber is made of a sheet material and is fixed onto the guide by means of spot welding.

In a possible embodiment of the present invention, the inner chamber is made of a plastic material.

In a possible embodiment of the present invention, at least one movement channel, which provides movement area from outside, is provided in the inner chamber.

In the present invention, there is at least one movable bearing piece in the inner chamber.

In a possible embodiment of the present invention, at least one first wedge channel is provided which permits movement of the movable bearing piece inside the inner chamber without rotation.

In a possible embodiment of the present invention, at least one first wedge is provided which is embodied on the movable bearing piece and which provides movement along the wedge channel placed in the inner chamber.

In a possible embodiment of the present invention, there is at least one movement pin connected to the movable bearing element and which is driven by the drive piece.

In a possible embodiment of the present invention, at least one second wedge channel, which provides connection to the movable bearing, is provided on the movement pin.

In a possible embodiment of the present invention, at least one second wedge, which provides connection to the movement pin, is provided on the movable bearing element.

In a possible embodiment of the present invention, at least one snap ring is provided which prevents removal of the movement pin from the movable bearing piece.

In a possible embodiment of the present invention, at least one outer chamber cover is provided which is connected to the outer chamber preventing removal of the inner chamber and the spring, movable bearing, movement pin and snap ring pieces provided in the inner chamber.

In a possible embodiment of the present invention, at least one tab is provided which provides connection of the outer chamber cover to the outer chamber.

In a possible embodiment of the present invention, the outer chamber cover is made of a plastic material.

### BRIEF DESCRIPTION OF THE FIGURES

Figure 1 is a lateral view of the sliding door vehicle body.
Figure 2 is a top view of the guide cover system.
Figure 3 is a cross sectional view where the guide cover is in opened position.
Figure 4 is a cross sectional view where the guide cover is in closed position.
Figure 5 is an assembled view of the guide cover hinge.
Figure 6 is an exploded view of the guide cover hinge.
Figure 7 is the view of the guide cover opening-closing mechanism prior to activation.
Figure 8 is a cross-sectional view of the guide cover opening-closing mechanism.
Figure 9 is an exploded view of the guide cover opening-closing mechanism.

### REFERENCE NUMBERS

| | | | |
|---|---|---|---|
| 1- | Sliding door vehicle body | 35- | Housing |
| 2- | Sliding door | 36- | Spring end |
| 10- | Guide cover system | 40- | Guide cover opening-closing mechanism |
| 11- | Guide cover | 41- | Outer chamber |
| 12- | Drive cable | 42- | Tab housing |
| 13- | Elbow piece | 43- | inner chamber |
| 14- | Bolt | 44- | Movement channel |
| 15- | Connection hole | 45- | Compression spring |
| 16- | Guide | 46- | Movable bearing |
| 20- | Cover hinge | 47- | Movement pin |
| 21- | Fixed hinge piece | 48- | Snap ring |
| 22- | Movable hinge piece | 49- | Outer chamber cover |
| 23- | Cam piece | 50- | Tab |
| 24- | Cable connection pin | 51- | Welding point |
| 25- | Cotter pin | 52- | First Wedge channel |
| 26- | Twist spring | 53- | First Wedge |
| 27- | Thrust pin | 54- | Second Wedge channel |
| 28- | Tabbed structure | 55- | Second Wedge |
| 29- | Perforated thrust pin | 60- | Roller mechanism |
| 30- | Bushing | 61- | Carrier roller |
| 31- | Welding | 62- | Guide roller |
| 32- | Cotter pin housing | 63- | Drive piece |
| 33- | Hole | 64- | Pin |
| 34- | Connection hole | 65- | Body |

### DESCRIPTION OF THE INVENTION

In this detailed description, the subject matter guide cover opening-closing mechanism (40) is explained with references to examples without forming any restrictive effect only in order to make the subject more understandable.

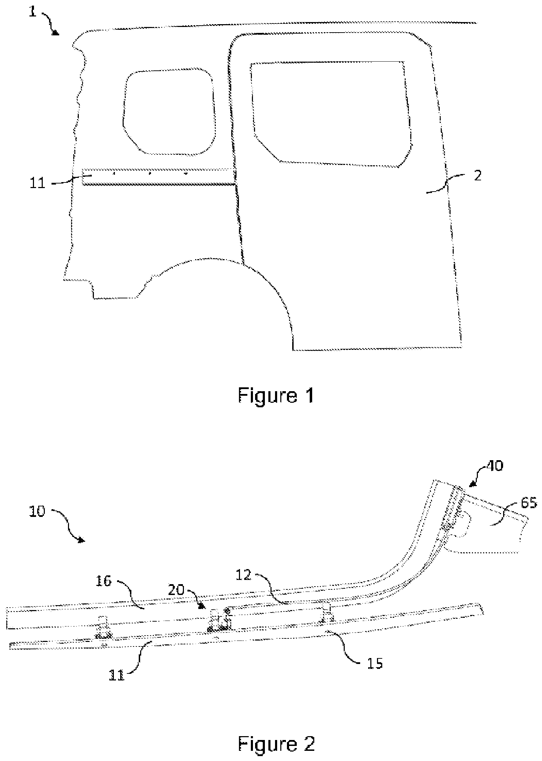

As can be seen in Figure 1, the sliding door (2) can be opened and closed thanks to the guides (not illustrated in the figures) placed on a sliding door vehicle body (1). There is a guide (16) provided relatively in the center part of the sliding door vehicle body (1), and there is a guide cover (11) used for preventing viewing of this guide from the external of the vehicle and for providing a complete structure impression on the body. The present invention relates to a guide cover opening-closing mechanism (40) which provides opening of said guide cover (11) such that the roller mechanism (60), which carries the door which moves on the guide (16), can pass when the sliding door (2) is opened and which provides closing of the guide cover (11) when the sliding door (2) is closed.

As can be seen in Figure 2, the guide cover system (10) comprises a guide (16), a cover hinge (20) which permits opening and closing of the guide cover (11) on the guide, and the guide cover (11) transfers the movement received from the sliding door opening-closing mechanism (40) to the guide cover by means of the drive cable (12) when the sliding door (2) is opened or closed.

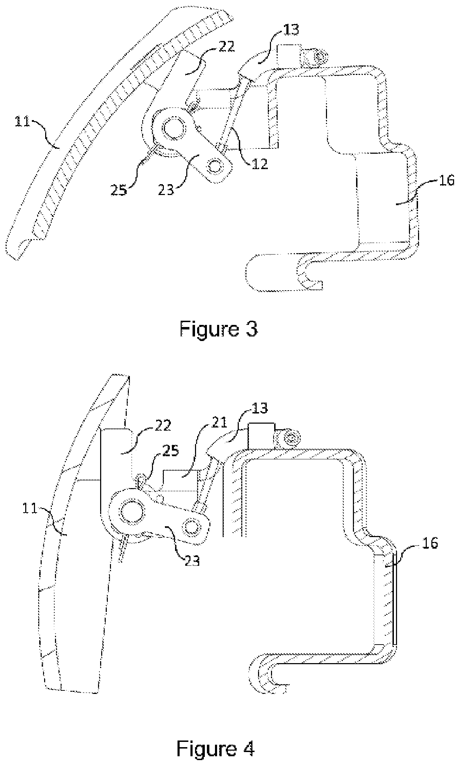

As can be seen in Figure 3 and 4, the positions in opened and closed conditions for the cover hinge (20) assembled onto the guide (16) and the guide cover (11) positioned on the movable hinge (22) of said cover hinge (20) are seen.

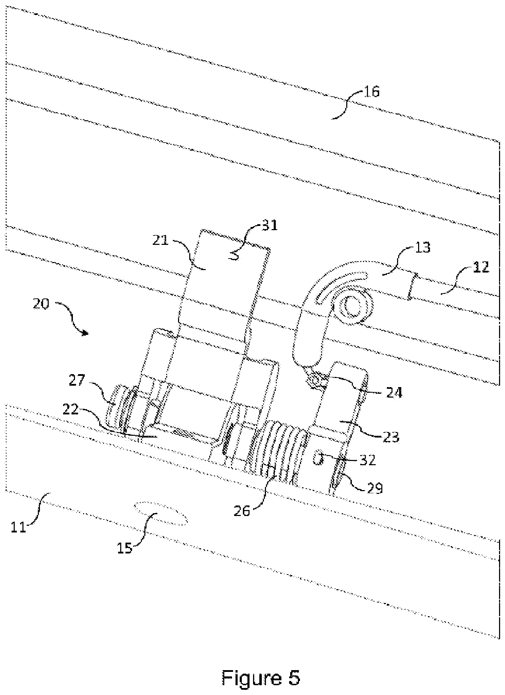

As can be seen in Figure 5, an assembled view of the cover hinge (20) is provided. The fixed hinge piece (21) of the cover hinge (20) is fixed onto the guide (16) by means of welding (31). By means of the connection hole (15) provided on the guide cover (11) and thanks to the connection hole provided on the movable hinge (22), the bolt (14) is connected. By means of the movement coming from the drive cable (12), the elbow piece (13) rotates the movement direction of the cable approximately 90° and transfers this movement to the cable connection pin (24). The cable connection pin (24) is riveted and fixed to the cam piece (23). The cable connection pin (24) transfers the received movement to the cam piece (23) and provides rotation of this piece around the perforated thrust pin (29) and provides opening and closing of the guide cover (11) fixed onto the movable hinge piece (22).

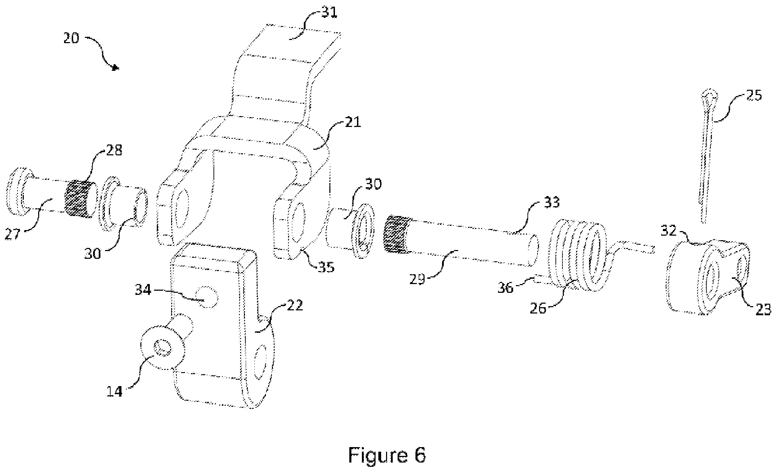

As can be seen in Figure 6, the exploded view of the cover hinge (20) is given. As can be seen here, the fixed hinge piece (21) and the movable hinge piece (22), the thrust pin (27) placed at the two sides of the hinge and perforated thrust pin (29) and bushing (30) which facilitates rotation of movable hinge piece (22) between these pins and the fixed hinge piece (21) are used. Thanks to the tabbed structure (28) provided on said thrust pin (27) and said perforated thrust pin (29), it is fixed to the movable hinge piece (22) and it can move together with the movable hinge piece (22) by means of this. There is a twist spring (26) positioned in a manner receiving the perforated thrust pin (29). One end (36) of said spring is connected to the housing (35) provided on the fixed hinge piece (21) and the rotational movement of the spring is delimited. By means of the cotter pin housing (32) provided on the cam piece (23) and by means of the cotter pin (25) passing through the hole (33) provided on the perforated thrust pin (29), the cam piece (23) is moved together with the perforated thrust pin (29).

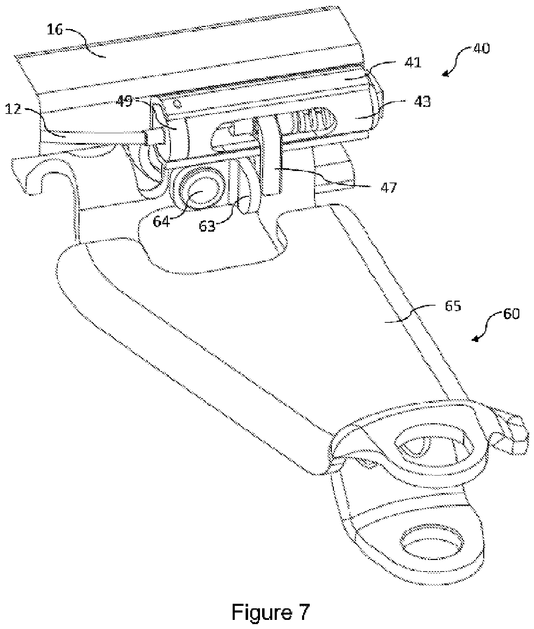

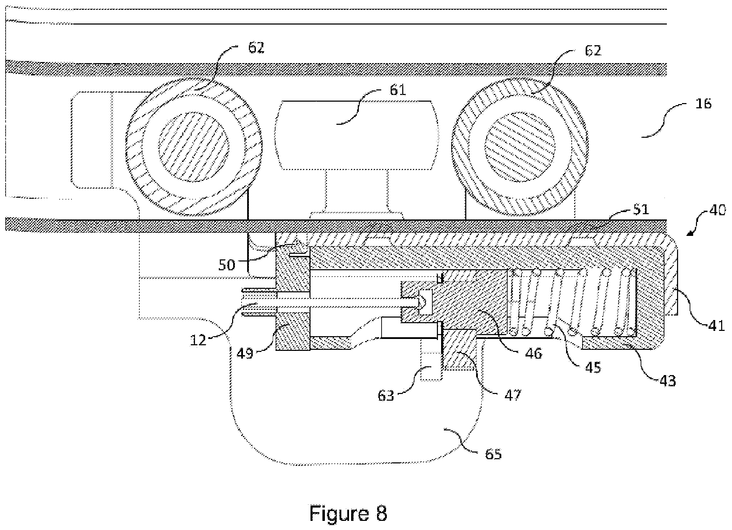

In Figure 7 and 8, the stop of the roller mechanism (60) just before the arrival of the sliding door (2) to the closing position is illustrated, in other words, the position of the guide cover opening-closing mechanism (40) before activation is illustrated. This process is realized by means of two types of rollers provided in the structure of the roller mechanism (60) which provides movement of the sliding door (2) in the guide (16). One of these is the carrier roller (61) which carries the weight of the sliding door (2) and there is the guide roller (62) which guides the door along the guide (2). Both rollers are connected to the body (65) of the roller mechanism (60) by means of pin (64). Moreover, the drive piece (63), connected onto the body by means of the pin (64), pushes the movement pin (47), positioned in the guide cover opening-closing mechanism (40), during closing of the door and said drive piece (63) triggers the system.

The outer chamber (41) provided in the structure of the guide cover opening-closing mechanism (40) is fixed onto the guide (16) through the welding (51) points. There is the inner chamber (43) in the outer chamber (41), there is the movable bearing (46) connected to the drive cable (12) inside said chamber, there is a movement pin (47) connected to the movable bearing and there is a compression spring (45) after the movement pin. There is tab (50) provided in the structure in a manner closing the outer chamber (41) in the direction where the movement cable (12) is fixed, and this tab has an outer chamber cover (49) formed in a manner engaging to the tab housing (42) provided on the outer chamber (41).

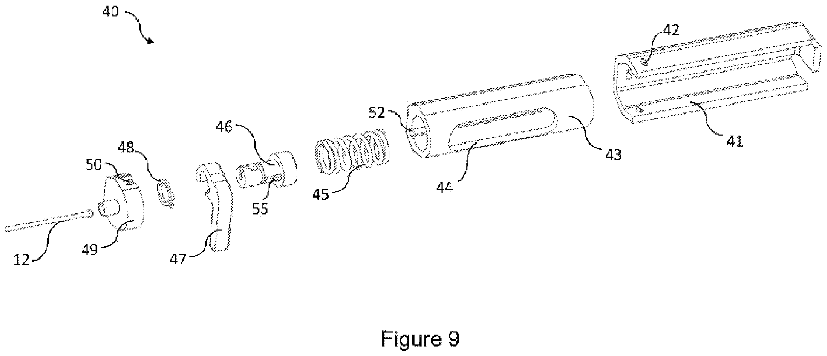

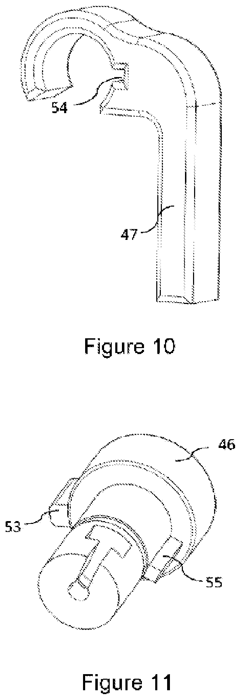

As can be seen in Figure 9, 10 and 11, the exploded view of the guide cover opening-closing mechanism (40) and the isometric views of the movement pin (47) and the movable bearing (46) pieces are given. After the compression spring (45) placed into the inner chamber (43), the movable bearing (46) piece is placed in a manner fixed to the drive cable (12). During placement, one of the most important items is that the first wedge (53), provided on the movable bearing (46) piece, engages to the first wedge channel (52) provided on the inner surface of the inner chamber (43). By means of this, the movable bearing (46) piece can move inside the inner chamber (43) without rotation. After this process, the movement pin (47) is passed through the movement channel (44) provided on the inner chamber (43) and is connected to the movable bearing (46) piece. The most important item here is that the second wedge channel (54) placed on the movement pin (47) is placed to the second wedge (55) provided on the movable bearing (46) where said second wedge channel (54) is assembled. By means of this, the rotation of the movement pin (47) is prevented. Afterwards, the snap ring (48) is fixed to the movable bearing (46) piece and the movement pin (47) is prevented from being separated from the movable bearing (46) piece. The inner chamber (43), whose assembly is completed, is placed into the outer chamber (41) fixed onto the guide (16) by means of welding (51) and it is fixed by means of connection of the tab (50), provided in the structure of the outer chamber cover (49), to the tab housing (42) provided on the outer chamber (41).

In said invention, in case the sliding door (2) is opened, the drive piece (63), positioned on the pin (64) where preferably the carrier roller (61) is connected on the body (65) of the roller mechanism (60) connected to the sliding door (2), is removed from the movement pin (47) and it moves together with the roller mechanism (60) until the final position where the sliding door (2) is opened. Meanwhile, as the stopper force exerted on the movement pin (47) is removed, the compression spring (45) placed in the inner chamber (43) is released from the compressed position and releases the drive cable (12) and the movable bearing piece (46) stops onto the outer chamber cover (49). Another structure which triggers this movement is the cam piece (23) connected to the drive cable (12) shown in Figure 5, and the twist spring (26), connected between the cam piece (23) and the fixed hinge piece (21), passes from the twist position to the released position and provides the guide cover (11) to arrive at the open position shown in Figure 3.

In case the sliding door (2) is closed, as can be seen in Figure 2, the roller mechanism (60) connected to the sliding door (2) contacts the movement pin (47) placed in the guide opening-closing mechanism (40) provided in the bent part of the guide. These parts which are in contact along the movement channel (44) preserve the contact form when the door is closed, and the compression spring (45), placed in the inner chamber (43), arrives at the compressed form from the released form. Meanwhile, by means of the movement of the movement pin (47) and thus, by means of the movement of the movement bearing (46) towards the closing direction, the drive cable (12) is drawn together and the cam piece (23) moves in the direction of closing the guide cover (11). Meanwhile, the twist spring (26) placed in the cover hinge (20) arrives at the compressed position as the guide cover (11) is closed. This cycle is repeated and realized each time the door is opened and closed.

The protection scope of the present invention is set forth in the annexed claims and cannot be restricted to the illustrative disclosures given above, under the detailed description, It is because a person skilled in the relevant art can obviously produce similar embodiments under the light of the foregoing disclosures, without departing from the main principles of the present invention.

### INDUSTRIAL APPLICABILITY

The present invention can be used in any kind of sliding door vehicle for hiding and protecting the center guides provided on the outer body of the sliding door vehicles provided particularly in automotive or defense industry. In the invention, all of said pieces can be produced by means of traditional production methods.

## Claims

1. A guide cover opening-closing mechanism (40) in vehicles having sliding door (2), comprising a cover (11) which can be opened and closed and fixed to the vehicle body by means of hinge and which provides hiding of guides (16) provided at the outer side of the vehicle, the sliding door (2) provides opening of said cover (11) when the sliding door (2) is opened and the sliding door (2) provides closing of said cover (11) when the sliding door (2) is closed by means of a drive of a roller mechanism (60) which carries the sliding door (2) on the guides (16) fixed to the vehicle body and the guide cover opening-closing mechanism (40) is fixed to an end of the guide (16) at a point which is close to the closing region of the door, **characterized by** comprising:
an inner chamber (43) which permits movement of the pieces providing opening and closing of the guide cover inside an_outer chamber (41),
a movement pin (47) which is driven by a drive piece (63) fixed onto the roller mechanism (60) and the movement pin (47) transfers said drive to a movable bearing (46),
the movable bearing (46) connected to the movement pin (47) and the movable bearing (46) is movable without rotating inside the inner chamber (43),
a spring (45) which is in contact with the movable bearing (46), the movable bearing (46) which begins movement inside the inner chamber (43) by means of driving of the movement pin (47),
an outer chamber cover (49) connected to the outer chamber (41) for preventing removal of the inner chamber (43) from the outer chamber (41).

2. The guide cover opening-closing mechanism according to claim 1, wherein at least one movement channel (44) is provided which permits assembly of the movement pin (47) on the inner chamber (43) piece and which delimits the movement distance.

3. The guide cover opening-closing mechanism according to claim 1, wherein at least one first wedge channel (52) is provided which permits movement of the movable bearing (46) piece inside the inner chamber (43) without rotation and which extends longitudinally.

4. The guide cover opening-closing mechanism according to claim 3, wherein at least one first wedge (53) is provided which is embodied on the movable bearing (46) piece and which provides movement along the first wedge channel (52) placed in the inner chamber.

5. The guide cover opening-closing mechanism according to claim 1, wherein at least one second wedge channel (54) is positioned on the movement pin (47) which provides connection around the movable bearing (46) piece where the movement pin (47) is fixed.

6. The guide cover opening-closing mechanism according to claim 5, wherein at least one second wedge (55) is provided where the second wedge channel (54) passes which prevents rotation of the movement pin (47) positioned on the movable bearing (46).

7. The guide cover opening-closing mechanism according to claim 1, wherein in order to prevent removal of the inner chamber (43) from the outer chamber (41), at least one tab (50) is positioned on the outer chamber cover (49) connected to the outer chamber.

8. The guide cover opening-closing mechanism according to claim 7, wherein at least one tab housing (42), which permits passage of the tab (50) provided on the outer chamber cover (49), is positioned on the outer chamber (41).

9. The guide cover opening-closing mechanism according to claim 1, wherein the outer chamber cover (49) is made of a plastic material.

10. The guide cover opening-closing mechanism according to claim 1, wherein at least one snap ring (46) is provided which prevents removal of the movement pin (47) from the movable bearing (46) piece.

## Patentansprüche

1. Führungsabdeckung-Öffnungs-Schließungs-Mechanismus (40) in Fahrzeugen mit Schiebetür (2) umfassend einen Deckel (11), der geöffnet und geschlossen werden kann und durch das Gelenk mit der Fahrzeugkarosserie befestigt werden kann und das Verstecken von den außerhalb des Fahrzeugs vorgesehenen Führungen (16) vorsieht, wobei die Schiebetür (2) das Öffnen des genannten Deckels (11) vorsieht, wenn die Schiebetür (2) geöffnet ist, und die Schiebetür (2) das Schließen des genannten Deckels (11) vorsieht, wenn die Schiebetür (2) geschlossen ist, durch den Antrieb des Rollenmechanismus (60), der auf den mit der Fahrzeugkarosserie befestigten Führungen (16) die Schiebetür (2) trägt, und der Führungsabdeckung-Öffnungs-Schließungs-Mechanismus (40) mit einem Ende der Führung (16) an einer Stelle befestigt wird, die in der Nähe des Schliessbereiches von Tür ist, **dadurch gekennzeichnet, dass** er umfasst:
eine innere Kammer (43), die innerhalb einer äußeren Kammer (41) die Bewegung der Stücke ermöglicht, die das Öffnen und das Schliessen von Führungsabdeckung vorsehen,
einen Bewegungsstift (47), der von einem auf dem Rollenmechanismus (60) befestigten Antriebsstück (63) angetrieben wird, wobei der Bewegungsstift (47) den genannten Antrieb auf ein Loslager (46) überträgt,
ein mit dem Bewegungsstift (47) verbundenes Loslager (46), wobei das Loslager (46) innerhalb der inneren Kammer (43) ohne Drehung bewegbar ist,
eine mit dem Loslager (46) in Kontakt stehende Feder (45), wobei sich das Loslager (46) durch das Antreiben des Bewegungsstifts (47) innerhalb der inneren Kammer (43) beginnt zu bewegen,
einen äußeren Kammer-Deckel (49), der zur Verhinderung von Entfernung der inneren Kammer (43) aus der äußeren Kammer (41) mit der äußeren Kammer (41) verbunden ist.

2. Führungsabdeckung-Öffnungs-Schließungs-Mechanismus nach Anspruch 1, **wobei** mindestens ein Bewegungskanal (44) vorgesehen ist, der die Montage vom Bewegungsstift (47) auf dem Stück der inneren Kammer (43) ermöglicht und den Bewegungsabstand begrenzt.

3. Führungsabdeckung-Öffnungs-Schließungs-Mechanismus nach Anspruch 1, **wobei** mindestens ein Keilkanal (52) vorgesehen ist, der die Bewegung vom Loslager (46) innerhalb der inneren Kammer (43) ohne Drehung begrenzt und sich longitudinal erstreckt.

4. Führungsabdeckung-Öffnungs-Schließungs-Mechanismus nach Anspruch 3, **wobei** mindestens ein erster Keil (53) vorgesehen ist, der sich auf dem Stück vom Loslager (46) befindet und die Bewegung entlang des ersten innerhalb der inneren Kammer eingesetzten Keilkanals (52) vorsieht.

5. Führungsabdeckung-Öffnungs-Schließungs-Mechanismus nach Anspruch 1, **wobei** mindestens ein zweiter Keilkanal (54), der um das Stück vom Loslager (46), bei dem der Bewegungsstift (47) befestigt wird, eine Verbindung vorsieht, auf dem Bewegungsstift (47) positioniert ist.

6. Führungsabdeckung-Öffnungs-Schließungs-Mechanismus nach Anspruch 5, **wobei** mindestens ein zweiter Keil (55), der die Drehung des auf dem Loslager (46) positionierten Bewegungsstifts (47) verhindert, an der Stelle vorgesehen ist, an der der zweiten Keilkanal (54) verläuft.

7. Führungsabdeckung-Offnungs-Schließungs-Mechanismus nach Anspruch 1, **wobei** mindestens eine Lasche (50) auf dem äußeren Kammer-Deckel (49) verbunden mit der äußeren Kammer positioniert ist, um die Entfernung von der inneren Kammer (43) aus der äußeren Kammer (41) zu verhindern.

8. Führungsabdeckung-Offnungs-Schließungs-Mechanismus nach Anspruch 7, **wobei** mindestens ein Lasche-Gehäuse (42), das den Durchgang von der auf dem äußeren Kammer-Deckel (49) vorgesehenen Lasche (50) ermöglicht, auf der äußeren Kammer (41) positioniert ist.

9. Führungsabdeckung-Öffnungs-Schließungs-Mechanismus nach Anspruch 1, **wobei** der äußere Kammer-Deckel (49) aus einem Kunststoff gefertigt ist.

10. Führungsabdeckung-Öffnungs-Schließungs-Mechanismus nach Anspruch 1, **wobei** mindestens ein Sprengring (48) vorgesehen ist, der die Entfernung vom Bewegungsstift (47) aus dem Stück des Loslagers (46) verhindert.

## Revendications

1. Mécanisme d'ouverture-fermeture de couvercle de guidage (40) dans des véhicules ayant une porte coulissante (2), comprenant un couvercle (11) qui peut être ouvert et fermé et fixé à la carrosserie du véhicule au moyen d'une charnière et qui assure la cache des guides (16) prévus sur le côté extérieur du véhicule, la porte coulissante (2) assure l'ouverture dudit couvercle (11) lorsque la porte coulissante (2) est ouverte et la porte coulissante (2) assure la fermeture dudit couvercle (11) lorsque la porte coulissante (2) est fermée au moyen d'un entraînement d'un mécanisme de rouleau (60) qui porte la porte coulissante (2) sur les guides (16) fixés à la carrosserie du véhicule et le mécanisme d'ouverture-fermeture du couvercle du guide (40) est fixé à une extrémité du guide (16) à un point qui est proche de la région de fermeture de la porte, le mécanisme est **caractérisé en ce qu'**il comprend :
une chambre intérieure (43) qui permet le mouvement des pièces assurant l'ouverture et la fermeture du couvercle de guidage à l'intérieur d'une chambre extérieure (41),
une tige de mouvement (47) qui est entraînée par une pièce d'entraînement (63) fixée sur le mécanisme de rouleau (60) et la tige de mouvement (47) transmet ledit entraînement à un palier mobile (46),
le palier mobile (46) est connecté à la tige de mouvement (47) et le palier mobile (46) est mobile sans rotation à l'intérieur de la chambre intérieure (43),
un ressort (45) qui est en contact avec le palier mobile (46), le palier mobile (46) commence à se déplacer à l'intérieur de la chambre intérieure (43) au moyen de l'entraînement de la tige de mouvement (47),
le couvercle de la chambre extérieure (49) est connecté à la chambre extérieure (41) pour empêcher l'enlèvement de la chambre intérieure (43) de la chambre extérieure (41).

2. Mécanisme d'ouverture-fermeture de couvercle de guidage selon la revendication 1, **dans lequel** au moins un canal de mouvement (44) qui permet l'assemblage de la tige de mouvement (47) sur la pièce de la chambre intérieure (43) et qui délimite la distance de mouvement est prévu.

3. Mécanisme d'ouverture-fermeture de couvercle de guidage selon la revendication 1, **dans lequel** au moins un premier canal de cale (52) qui limite le mouvement de la pièce du palier mobile (46) à l'intérieur de la chambre intérieure (43) de manière à ce qu'elle ne puisse pas tourner et qui s'étend longitudinalement est prévu.

4. Mécanisme d'ouverture-fermeture de couvercle de guidage selon la revendication 3, **dans lequel** au moins une première cale (53) qui est conçu sur la pièce du palier mobile (46) et qui assure un mouvement le long du premier canal de cale (52) placé dans la chambre intérieure est prévu.

5. Mécanisme d'ouverture-fermeture de couvercle de guidage selon la revendication 1, **dans lequel** au moins un second canal de cale (54) qui assure une connexion autour de la pièce du palier mobile (46) où la tige de mouvement (47) est fixée, est positionné sur la tige de mouvement (47).

6. Mécanisme d'ouverture-fermeture de couvercle de guidage selon la revendication 5, **dans lequel** au moins une seconde cale (55) qui empêche la rotation de la tige de mouvement (47) positionné sur le palier mobile (46) est prévue où le second canal de cale (54) passe.

7. Mécanisme d'ouverture-fermeture de couvercle de guidage selon la revendication 1, **dans lequel** afin d'empêcher l'enlèvement de la chambre intérieure (43) de la chambre extérieure (41), au moins une languette (50) est positionnée sur le couvercle de la chambre extérieure (49) connecté à la chambre extérieure.

8. Mécanisme d'ouverture-fermeture de couvercle de guidage selon la revendication 7, **dans lequel** au moins un logement de languette (42), qui permet le passage de la languette (50) prévue sur le couvercle de la chambre extérieure (49), est positionné sur la chambre extérieure (41).

9. Mécanisme d'ouverture-fermeture de couvercle de guidage selon la revendication 1, **dans lequel** le couvercle de la chambre extérieure (49) est réalisé en matière plastique.

10. Mécanisme d'ouverture-fermeture de couvercle de guidage selon la revendication 1, **dans lequel** au moins un anneau de retenue (48) qui empêche l'enlèvement de la tige de mouvement (47) de la pièce du palier mobile (46).
